# EUROPEAN PATENT APPLICATION

(11) **EP 4 223 832 A1**
(43) Date of publication of application: **09.08.2023**
(21) Application number: 21875950.4
(22) Date of filing: 08.09.2021
(51) Int. Cl.: C08J 5/18, C08G 69/26, B32B 27/34, G02B 1/04, G09F 9/30

(54) **POLYAMIDE-BASED FILM, MANUFACTURING METHOD THEREFOR, AND COVER WINDOW AND DISPLAY DEVICE EACH COMPRISING SAME**

(30) Priority: 29.09.2020 KR 20200127506; 29.10.2020 KR 20200142496
(71) Applicant: SK microworks Co., Ltd., Suwon-si, Gyeonggi-do 16336 (KR)
(72) Inventor: KIM, Han Jun, Suwon-si, Gyeonggi-do 16338 (KR); OH, Dae Seong, Suwon-si, Gyeonggi-do 16338 (KR); KIM, Sun Hwan, Suwon-si, Gyeonggi-do 16338 (KR); LEE, Jin Woo, Suwon-si, Gyeonggi-do 16338 (KR); KIM, Heung Sik, Suwon-si, Gyeonggi-do 16338 (KR); RYU, Jiyeon, Suwon-si, Gyeonggi-do 16338 (KR)
(74) Representative: Dehns
(86) International application number: PCT/KR2021/012186
(87) International publication number: WO 2022/071675

(57) **Abstract**

Embodiments relate to a polyamide-based film, a manufacturing method therefor, and a cover window and a display device each comprising same, wherein the polyamide-based film has excellent optical characteristics, such as transmittance, haze, and yellowness, and excellent mechanical characteristics, such as modulus and thickness uniformity. The polyamide-based film contains a polyamide-based polymer and includes a sum XRD peak obtained by adding up a first XRD peak having the maximum value in the section where the 2θ value is 10° (inclusive) to 20° (exclusive) and a second XRD peak having the maximum value in the section where the 2θ value is 20° to 25°, on the XRD graph, wherein the full width at half maximum of the first XRD peak is 6° or less.

## Description

### Technical Field

Embodiments relate to a polyamide-based film excellent in optical properties and mechanical properties, to a process for preparing the same, and to a cover window and a display device comprising the same.

### Background Art

Polyamide-based polymers are excellent in resistance to friction, heat, and chemicals. Thus, they are employed in such applications as primary electrical insulation, coatings, adhesives, resins for extrusion, heat-resistant paintings, heat-resistant boards, heat-resistant adhesives, heat-resistant fibers, and heat-resistant films.

Polyamide is used in various fields. For example, polyamide is made in the form of a powder and used as a coating for a metal or a magnetic wire. It is mixed with other additives depending on the application thereof. In addition, polyamide is used together with a fluoropolymer as a painter for decoration and corrosion prevention. It also plays a role of bonding a fluoropolymer to a metal substrate. In addition, polyamide is used to coat kitchenware, used as a membrane for gas separation by virtue of its heat resistance and chemical resistance, and used in natural gas wells for filtration of such contaminants as carbon dioxide, hydrogen sulfide, and impurities.

In recent years, polyamide has been developed in the form of a film, which is less expensive and has excellent optical, mechanical, and thermal characteristics. Such a polyamide-based film may be applied to display materials for organic light-emitting diodes (OLEDs) or liquid crystal displays (LCDs), and the like, and to antireflection films, compensation films, and retardation films if retardation properties are implemented.

When such a polyamide-based film is applied to a foldable display, a flexible display, and the like, optical properties such as transparency and colorlessness and mechanical properties such as flexibility and hardness are required. In general, however, since optical properties and mechanical properties are in a trade-off relationship, an improvement in the mechanical properties would impair the optical properties.

Accordingly, research on polyamide-based films with improved mechanical properties and optical properties is continuously required.

### Disclosure of Invention

### Technical Problem

The embodiments aim to provide a polyamide-based film excellent in optical properties and mechanical properties, a process for preparing the same, and a cover window and a display device comprising the same.

### Solution to Problem

The polyamide-based film according to an embodiment comprises a polyamide-based polymer and has a first peak having a maximum value in a section where 2θ is 10° to less than 20° on an XRD graph, wherein the first XRD peak may have a full width at half maximum of 6° or less.

The cover window for a display device according to an embodiment comprises a polyamide-based film and a functional layer, wherein the polyamide-based film has a first peak having a maximum value in a section where 2θ is 10° to less than 20° on an XRD graph, and the first XRD peak may have a full width at half maximum of 6° or less.

The display device according to an embodiment comprises a display unit; and a cover window disposed on the display unit, wherein the cover window comprises a polyamide-based film and a functional layer, the polyamide-based film has a first peak having a maximum value in a section where 2θ is 10° to less than 20° on an XRD graph, and the first XRD peak may have a full width at half maximum of 6° or less.

The process for preparing a polyamide-based film according to an embodiment comprises polymerizing a diamine compound and a dicarbonyl compound in an organic solvent to prepare a solution comprising a polyamide-based polymer; casting the polymer solution to prepare a gel sheet; and thermally treating the gel sheet.

The polyamide-based film according to an embodiment comprises a polyamide-based polymer and has a first IR peak having a maximum value in a section where the wavenumber is 2,950 cm⁻¹ to 2,900 cm⁻¹ and a second IR peak having a maximum value in a section where the wavenumber is 2,875 cm⁻¹ to 2,825 cm⁻¹ on an IR spectrum, wherein the area of the first IR peak may be 1.4 times or less relative to the area of the second IR peak.

The cover window for a display device according to an embodiment comprises a polyamide-based film and a functional layer, wherein the polyamide-based film has a first IR peak having a maximum value in a section where the wavenumber is 2,950 cm⁻¹ to 2,900 cm⁻¹ and a second IR peak having a maximum value in a section where the wavenumber is 2,875 cm⁻¹ to 2,825 cm⁻¹ on an IR spectrum, wherein the area of the first IR peak may be 1.4 times or less relative to the area of the second IR peak.

The display device according to an embodiment comprises a display unit; and a cover window disposed on the display unit, wherein the cover window comprises a polyamide-based film and a functional layer, the polyamide-based film has a first IR peak having a maximum value in a section where the wavenumber is 2,950 cm⁻¹ to 2,900 cm⁻¹ and a second IR peak having a maximum value in a section where the wavenumber is 2,875 cm⁻¹ to 2,825 cm⁻¹ on an IR spectrum, wherein the area of the first IR peak may be 1.4 times or less relative to the area of the second IR peak.

The process for preparing a polyamide-based film according to an embodiment comprises polymerizing a diamine compound and a dicarbonyl compound in an organic solvent to prepare a solution comprising a polyamide-based polymer; casting the solution comprising the polymer to prepare a gel sheet; and thermally treating the gel sheet.

### Advantageous Effects of Invention

In the polyamide-based film according to an embodiment, when the XRD peaks on an XRD graph are separated, the first peak located in a section where 2θ is 10° to less than 20° has a full width at half maximum of 6° or less. The spacing between lattice planes of the crystalline components corresponding to the first XRD peak is relatively uniform, thereby having excellent optical properties (low yellow index, low haze, and high light transmittance) while the mechanical properties (modulus, scratch resistance, and the like) can be enhanced.

For example, the percentage of the full width at half maximum of the first XRD peak relative to the sum of the full width at half maximum of the first XRD peak and the full width at half maximum of the second XRD peak is 40% or less, in which case the spacing between lattice planes of the wide-spaced crystalline forms can be relatively uniform. As a result, the modulus, transmittance, and scratch resistance of the polyamide-based film may be enhanced, and the haze and yellow index thereof may be reduced.

In the polyamide-based film according to an embodiment, the area of the first IR peak located in a section where the wavenumber is 2,950 cm⁻¹ to 2,900 cm⁻¹ is 1.4 times or less relative to the area of the second IR peak located in a section where the wavenumber is 2,875 cm⁻¹ to 2,825 cm⁻¹ on an IR spectrum; thus, it may have excellent modulus and transmittance, along with low haze and yellow index.

In the polyamide-based film according to some embodiments, the area of the first IR peak relative to the area of the second IR peak is 0.6 or more, indicating that the difference between the area of the first IR peak and the area of the second IR peak is small. Since the chemical bond corresponding to the first IR peak and the chemical bond corresponding to the second IR peak are present at a ratio that does not differ significantly, such properties as modulus, transmittance, haze, and yellow index may be improved together.

In addition, the polyamide-based film according to the embodiment has excellent mechanical properties and optical properties, so that it can be advantageously applied to a cover window for a display device and a foldable or flexible displace device.

### Brief Description of Drawings

Fig. 1 is a cross-sectional view of a display device according to an embodiment.
Fig. 2 is a schematic flow diagram of a process for preparing a polyamide-based film according to an embodiment.
Fig. 3 is a schematic flow diagram that illustrates the steps for preparing a polyamide-based polymer solution according to some embodiments.
Fig. 4 is an XRD analysis graph (diffractogram) of the polyamide-based film of Example 1.
Fig. 5 shows FT-IR analysis spectra of the polyamide-based films of the Examples and Comparative Examples.
Fig. 6 shows an FT-IR analysis spectrum of the polyamide-based film of Example 7.
Fig. 7 shows an FT-IR analysis spectrum of the polyamide-based film of Comparative Example 5.
Fig. 8 shows an FT-IR analysis spectrum of the polyamide-based film of Comparative Example 6.

### <Description of the numerals>

100: polyamide-based film
101: first side
102: second side
200: functional layer
300: cover window
400: display unit
500: adhesive layer

### Best Mode for Carrying Out the Invention

Hereinafter, the embodiments will be described in detail with reference to the accompanying drawings so that those skilled in the art to which the present invention pertains may easily practice them. However, the embodiments may be implemented in many different ways and are not limited to those described herein.

Throughout the present specification, in the case where each film, window, panel, layer, or the like is mentioned to be formed "on" or "under" another film, window, panel, layer, or the like, it means not only that one element is directly formed on or under another element, but also that one element is indirectly formed on or under another element with other element(s) interposed between them. In addition, the term on or under with respect to each element may be referenced to the drawings. For the sake of description, the sizes of individual elements in the appended drawings may be exaggeratedly depicted and do not indicate the actual sizes. In addition, the same reference numerals refer to the same elements throughout the specification.

Throughout the present specification, when a part is referred to as "comprising" an element, it is understood that other elements may be comprised, rather than other elements are excluded, unless specifically stated otherwise.

In the present specification, a singular expression is interpreted to cover a singular or plural number that is interpreted in context unless otherwise specified.

In addition, all numbers and expressions related to the quantities of components, reaction conditions, and the like used herein are to be understood as being modified by the term "about," unless otherwise indicated.

The terms first, second, and the like are used herein to describe various elements, and the elements should not be limited by the terms. The terms are used only for the purpose of distinguishing one element from another.

In addition, the term "substituted" as used herein means to be substituted with at least one substituent group selected from the group consisting of deuterium, -F, -Cl, -Br, -I, a hydroxyl group, a cyano group, a nitro group, an amino group, an amidino group, a hydrazine group, a hydrazone group, an ester group, a ketone group, a carboxyl group, a substituted or unsubstituted alkyl group, a substituted or unsubstituted alkenyl group, a substituted or unsubstituted alkynyl group, a substituted or unsubstituted alkoxy group, a substituted or unsubstituted alicyclic organic group, a substituted or unsubstituted heterocyclic group, a substituted or unsubstituted aryl group, and a substituted or unsubstituted heteroaryl group. The substituent groups enumerated above may be connected to each other to form a ring.

### Polyamide-based film

An embodiment provides a polyamide-based film that not only is excellent in optical properties in terms of high transmittance, low haze, and low yellow index, but also has excellent scratch resistance and/or modulus.

The polyamide-based film according to an embodiment comprises a polyamide-base polymer.

The polyamide-based film may comprise an XRD peak on an XRD graph corresponding to crystalline components. The XRD peak may be a single XRD peak or a combined XRD peak comprising a plurality of single XRD peaks. The plurality of XRD peaks contained in the combined XRD peak may be separated into single XRD peaks through an XRD analysis method and program. In some embodiments, the single XRD peak and the combined XRD peak may have a first XRD peak having a maximum value in a section where 2θ is 10° to less than 20°.

For example, the maximum value or highest point of the first XRD peak may be located in a section where 2θ is 10° to less than 20°.

In some embodiments, the combined XRD peak may further have a second peak. In some embodiments, the combined XRD peak may be composed of a combination of the first XRD peak and the second XRD peak.

For example, the second XRD peak may have a maximum value in a section where 2θ is 20° to 25°. The maximum value or highest point of the second XRD peak may be located in a section where 2θ is 20° to 25°.

In addition, the first XRD peak and the second XRD peak may be combined to form a combined XRD peak. In some embodiments, the combined XRD peak may be located in a section where 2θ is 2° to 40°, preferably 5° to 35°.

As used herein, the term "XRD peak" may refer to an XRD pattern or its shape deviating from the trend or a shape thereof when the XRD pattern outside the section where the XRD peak is located on an XRD graph has, for example, a specific trend that can be expressed as a function.

The function may be, for example, an exponential function expressed as y = ae^{x} + b. Here, a and b may be constants.

The specific trend may be defined as a baseline on the XRD graph.

For example, the baseline may correspond to an XRD pattern of an amorphous component in the polyamide-based polymer or film, and the XRD peak may correspond to an XRD pattern of a crystalline component.

In such a case, the XRD peak may be defined as a portion having an intensity value greater than the baseline (a portion present above the baseline). The baseline may be provided as a base of the XRD peak.

In some embodiments, the full width at half maximum of the XRD peak may be measured. For example, when the maximum distance (maximum height) from a tangent line to any point on the baseline to the XRD pattern of the XRD peak in a direction perpendicular to the tangent line is derived, the full width at half maximum may be defined as a width in a direction parallel to the tangent line from the point of 1/2 of the maximum height.

Among crystal forms with various spacings between lattice planes appearing on an XRD pattern, crystal forms having relatively wide spacings between lattice planes may be defined as wide-spaced crystal forms, and crystal forms having relatively narrow spacings between lattice planes may be defined as narrow-spaced crystal forms.

In some embodiments, the crystalline components corresponding to the first XRD peak may comprise wide-spaced crystal forms having a relatively wide spacing between lattice planes at a high ratio, and the crystalline components corresponding to the second XRD peak may comprise narrow-spaced crystal forms having a relatively narrow spacing between lattice planes at a high ratio.

The first XRD peak may have a full width at half maximum of 6° or less. In such a case, the deviation of the spacing between lattice planes of the crystalline components corresponding to the first XRD peak may be small. For example, the uniformity of the spacing between lattice planes of wide-spaced crystal forms is increased, so that it is possible to improve the mechanical properties such as scratch resistance and modulus and the optical properties such as transmittance, haze, and yellow index of the polyamide-based film. Preferably, the full width at half maximum of the first XRD peak may be 5.8° or less or 5.6° or less. In addition, the full width at half maximum of the first XRD peak may be 5.0° or more, 5.2° or more, 5.4° or more, or 5.5° or more.

In some embodiments, the percentage of the full width at half maximum of the first XRD peak relative to the sum of the full width at half maximum of the first XRD peak and the full width at half maximum of the second XRD peak may be 40% or less. In such a case, for example, the uniformity of the spacing between lattice planes of wide-spaced crystal forms may be higher than the uniformity of the spacing between lattice planes of narrow-spaced crystal forms. In such a case, the wide-spaced crystalline forms may have a relatively uniform spacing between lattice planes. Thus, it is possible to improve the mechanical properties such as scratch resistance and modulus and the optical properties such as transmittance, haze, and yellow index of the polyamide-based film. Preferably, the first XRD peak may have a percentage of the full width at half maximum of 38% or less or 36% or less.

The polyamide-based film according to some embodiments may have a first IR peak and a second IR peak in a section where the wavenumber is 3,000 cm⁻¹ to 2,800 cm⁻¹ on an IR spectrum.

In some embodiments, the first IR peak may have a maximum value in a section where the wavenumber is 2,950 cm⁻¹ to 2,900 cm⁻¹. For example, the highest point of the first IR peak may be located in a section where the wavenumber is 2,950 cm⁻¹ to 2,900 cm⁻¹.

The second IR peak may have a maximum value in a section where the wavenumber is 2,875 cm⁻¹ to 2,825 cm⁻¹. For example, the highest point of the second IR peak may be located in a section where the wavenumber is 2,875 cm⁻¹ to 2,825 cm⁻¹.

In some embodiments, the first IR peak may appear in a section where the wavenumber is about 2,960 cm⁻¹ to 2,895 cm⁻¹, and the second IR peak may appear in a section where the wavenumber is about 2,890 cm⁻¹ to 2,820 cm⁻¹.

An amide group (-C(=O)NH-) contained in a polyamide-based polymer that has a sufficient length may form a hydrogen bond with an adjacent amide group (another amide group in the molecule) when the polymer is bent. The hydrogen bond may be formed between oxygen and hydrogen of the amide groups and may also be formed between nitrogen and hydrogen.

Alternatively, amide groups contained in different polyamide-based polymers may form a hydrogen bond (intermolecular hydrogen bond) with each other. Therefore, at least four types of hydrogen bonds including intramolecular oxygen-hydrogen bonds, intramolecular nitrogen-hydrogen bonds, intermolecular oxygen-hydrogen bonds, and intermolecular nitrogen-hydrogen bonds can be formed.

In embodiments, the first IR peak and the second IR peak may be derived from the hydrogen bonds. For example, some of the four types of hydrogen bonds (hereinafter referred to as first hydrogen bonding groups) may correspond to the first IR peak, and others (hereinafter referred to as second hydrogen bonding groups) may correspond to the second IR peak.

For example, one of the intramolecular hydrogen bond and the intermolecular hydrogen bond may correspond to the first IR peak, and the other may correspond to the second IR peak. Alternatively, one of the oxygen-hydrogen bond and the nitrogen-hydrogen bond may correspond to the first IR peak, and the other may correspond to the second IR peak.

In some embodiments, the polyamide-based polymer may not comprise a Cₛₚ₃-H bond. Therefore, the IR spectrum may not have an IR peak derived from Cₛₚ₃-H in a section where the wavenumber is about 3,000 cm⁻¹ to 2,800 cm⁻¹, and an IR peak derived from the hydrogen bond may appear in a section where the wavenumber is 3,000 cm⁻¹ to 2,800 cm⁻¹.

The area of the first IR peak is 1.4 times or less relative to the area of the second IR peak. In such a case, the difference between the ratio of the first hydrogen bonding groups and the second hydrogen bonding groups is not large; thus, it is possible to enhance the optical properties such as light transmittance, haze, and yellow index and the mechanical properties such as modulus of the polyamide-based film. Preferably, the area of the first IR peak may be 1.3 times or less, 1.2 times or less, or 1.1 times or less, relative to the area of the second IR peak.

In some embodiments, the area of the first IR peak may be 0.6 times or more, 0.7 times or more, 0.8 times or more, or 0.9 times or more, relative to the area of the second IR peak.

In some embodiments, the area of the first IR peak may be 0.8 times to 1.2 times relative to the area of the second IR peak. In such a case, the first hydrogen bonding groups and the second hydrogen bonding groups are present in substantially the same amount; thus, it is possible to enhance the optical properties and mechanical properties of the polyamide-based film. Preferably, the area of the first IR peak may be 0.9 times to 1.1 times relative to the area of the second IR peak.

The area of an IR peak may be obtained by subtracting the area of noise from the total area of the section where the IR peak appears in an IR spectrum. For example, a straight line connecting the start point and the end point of the IR peak may be defined as a baseline, and a region below the baseline (a region with low absorbance) may indicate noise.

The polyamide-based film according to an embodiment may have an x-direction refractive index (nₓ) of 1.60 to 1.70, 1.61 to 1.69, 1.62 to 1.68, 1.64 to 1.68, 1.64 to 1.66, or 1.64 to 1.65.

In addition, the polyamide-based film may have a y-direction refractive index (n_{y}) of 1.60 to 1.70, 1.61 to 1.69, 1.62 to 1.68, 1.63 to 1.68, 1.63 to 1.66, or 1.63 to 1.64.

Further, the polyamide-based film may have a z-direction refractive index (n_{z}) of 1.50 to 1.60, 1.51 to 1.59, 1.52 to 1.58, 1.53 to 1.58, 1.54 to 1.58, or 1.54 to 1.56.

If the x-direction refractive index, the y-direction refractive index, and the z-direction refractive index of the polyamide-based film are within the above ranges, when the film is applied to a display device, its visibility is excellent not only from the front but also from a lateral side, so that a wide angle of view can be achieved.

The polyamide-based film according to an embodiment may have an in-plane retardation (Rₒ) of 800 nm or less. Specifically, the in-plane retardation (Rₒ) of the polyamide-based film may be 700 nm or less, 600 nm or less, 550 nm or less, 100 nm to 800 nm, 200 nm to 800 nm, 200 nm to 700 nm, 300 nm to 700 nm, 300 nm to 600 nm, or 300 nm to 540 nm.

In addition, the polyamide-based film according to an embodiment may have a thickness direction retardation (Rₜₕ) of 5,000 nm or less. Specifically, the thickness direction retardation (Rₜₕ) of the polyamide-based film may be 4,800 nm or less, 4,700 nm or less, 4,650 nm or less, 1,000 nm to 5,000 nm, 1,500 nm to 5,000 nm, 2,000 nm to 5,000 nm, 2,500 nm to 5,000 nm, 3,000 nm to 5,000 nm, 3,500 nm to 5,000 nm, 4,000 nm to 5,000 nm, 3,000 nm to 4,800 nm, 3,000 nm to 4,700 nm, 4,000 nm to 4,700 nm, or 4,200 nm to 4,650 nm.

Here, the in-plane retardation (Rₒ) is a parameter defined by a product (Δn_{xy} × d) of anisotropy (Δn_{xy} = | nₓ - n_{y} |) of refractive indices of two mutually perpendicular axes on a film and the film thickness (d), which is a measure of the degree of optical isotropy and anisotropy.

In addition, the thickness direction retardation (Rₜₕ) is a parameter defined by a product of an average of the two birefringences Δn_{xz} (= | nₓ - n_{z} |) and Δn_{yz} (= | n_{y} - n_{z} |) observed on a cross-section in the film thickness direction and the film thickness (d).

If the in-plane retardation and the thickness direction retardation of the polyamide-based film are within the above ranges, when the film is applied to a display device, it is possible to minimize the optical distortion and color distortion and to minimize the light leakage from a lateral side as well.

The polyamide-based film may comprise a filler in addition to the polyamide-base polymer.

The filler may have an average particle diameter of 60 nm to 180 nm. Specifically, the average particle diameter of the filler may be 80 nm to 180 nm, 100 nm to 180 nm, 110 nm to 160 nm, 120 nm to 160 nm, or 130 nm to 150 nm, but it is not limited thereto.

If the average particle diameter of the filler is within the above range, the optical properties may not be deteriorated even when a relatively large amount thereof is employed as compared with other inorganic fillers.

The filler may have a refractive index of 1.55 to 1.75. Specifically, the refractive index of the filler may be 1.60 to 1.75, 1.60 to 1.70, 1.60 to 1.68, or 1.62 to 1.65, but it is not limited thereto.

If the refractive index of the filler satisfies the above range, the birefringence values related to nₓ, n_{y}, and n_{z} can be appropriately adjusted, and the luminance of the film at various angles can be improved.

On the other hand, if the refractive index of the filler is outside the above range, there may arise a problem in that the filler is visually noticeable on the film or that the haze is increased due to the filler.

The content of the filler may be 100 ppm to 3,000 ppm based on the total weight of the solids content of the polyamide-based polymer. Specifically, the content of the filler may be 100 ppm to 2,500 ppm, 100 ppm to 2,200 ppm, 200 ppm to 2,500 ppm, 200 ppm to 2,200 ppm, 250 ppm to 2,100 ppm, or 300 ppm to 2,000 ppm, based on the total weight of the solids content of the polyamide-based polymer, but it is not limited thereto.

If the content of the filler is outside the above range, the haze of the film is steeply increased, and the filler may aggregate with each other on the surface of the film, so that a feeling of foreign matter may be visually observed, or it may cause a trouble in the sliding performance or deteriorate the windability in the preparation process.

The filler may comprise, for example, silica and barium sulfate, but it is not limited thereto.

The filler may be employed in the form of particles. In addition, the surface of the filler is not subjected to special coating treatment, and it may be uniformly dispersed in the entire film.

As the polyamide-based film comprises the filler, the film can secure a wide angle of view without a deterioration in the optical properties.

The content of residual solvents in the polyamide-based film may be 1,500 ppm or less. For example, the content of residual solvents may be 1,200 ppm or less, 1,000 ppm or less, 800 ppm or less, or 500 ppm or less, but it is not limited thereto.

The residual solvent refers to a solvent that has not been volatilized during the film production and remains in the film finally produced.

If the content of the residual solvents in the polyamide-based film exceeds the above range, the durability of the film may be deteriorated, and it may have an impact on the luminance.

When the polyamide-based film according to an embodiment based on a thickness of 50 µm is folded to have a radius of curvature of 3 mm, the number of folding before the fracture may be 200,000 or more.

The number of folding counts one when the film is folded to have a radius of curvature of 3 mm and then unfolded.

As the number of folding of the polyamide-based film satisfies the above range, it can be advantageously applied to a foldable display device or a flexible display device.

The polyamide-based film according to an embodiment may have a surface roughness of 0.01 µm to 0.07 µm. Specifically, the surface roughness may be 0.01 µm to 0.07 µm or 0.01 µm to 0.06 µm, but it is not limited thereto.

As the surface roughness of the polyamide-based film satisfies the above range, it may be advantageous for achieving high luminance even when the angle from the normal direction of a surface light source is increased.

The polyamide-based film according to an embodiment comprises a polyamide-based polymer, and the polyamide-based polymer may comprise an amide repeat unit and, optionally, may comprise an imide repeat unit.

In some embodiments, the polyamide-based polymer may comprise only the amide repeat unit without the imide repeat unit. In such a case, the modulus of the polyamide-based film is increased, so that it can be advantageously applied to a foldable/flexible displace device, along with enhanced transmittance and reduced yellow index and haze.

The polyamide-based film comprises a polyamide-based polymer, and the polyamide-based polymer may be prepared by simultaneously or sequentially reacting reactants that comprise a diamine compound and a dicarbonyl compound. Specifically, the polyamide-based polymer may be prepared by polymerizing a diamine compound and a dicarbonyl compound.

Alternatively, the polyamide-based polymer is prepared by polymerizing a diamine compound, a dianhydride compound, and a dicarbonyl compound. Here, the polyamide-based polymer may comprise an imide repeat unit derived from the polymerization of the diamine compound and the dianhydride compound and an amide repeat unit derived from the polymerization of the diamine compound and the dicarbonyl compound.

In some embodiments, the polyamide-based polymer may be polymerized without the dianhydride compound. In such a case, the polyamide-based polymer may not comprise an imide repeat unit.

The polyamide-based film according to an embodiment may comprise a polyamide-based polymer in which an amide bond is formed by the polymerization of a diamine compound and a dicarbonyl compound. The polyamide-based film may optionally comprise a polyamide-imide-based polymer in which an imide bond is formed by the further polymerization of a dianhydride compound.

In some embodiments, the polyamide-based polymer may not comprise the polyamide-imide-based polymer. In such a case, the modulus of the polyamide-based film is increased, so that it can be advantageously applied to a foldable/flexible displace device, along with enhanced transmittance and reduced yellow index and haze.

The diamine compound is a compound that forms an imide bond with the dianhydride compound and forms an amide bond with the dicarbonyl compound, to thereby form a copolymer.

The diamine compound is not particularly limited, but it may be, for example, an aromatic diamine compound that contains an aromatic structure. For example, the diamine compound may be a compound represented by the following Formula 1.

[Formula 1] **H₂N-(E)ₑ-NH₂**

In Formula 1, E may be selected from a substituted or unsubstituted divalent C₆-C₃₀ aliphatic cyclic group, a substituted or unsubstituted divalent C₄-C₃₀ heteroaliphatic cyclic group, a substituted or unsubstituted divalent C₆-C₃₀ aromatic cyclic group, a substituted or unsubstituted divalent C₄-C₃₀ heteroaromatic cyclic group, a substituted or unsubstituted C₁-C₃₀ alkylene group, a substituted or unsubstituted C₂-C₃₀ alkenylene group, a substituted or unsubstituted C₂-C₃₀ alkynylene group, -O-, -S-, -C(=O)-, - CH(OH)-, -S(=O)₂-, -Si(CH₃)₂-, -C(CH₃)₂-, and -C(CF₃)₂-.
e is selected from integers of 1 to 5. When e is 2 or more, the Es may be the same as, or different from, each other.

(E)ₑ in Formula 1 may be selected from the groups represented by the following Formulae 1-la to 1-14a, but it is not limited thereto.

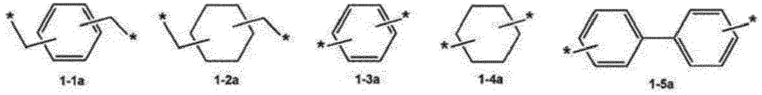

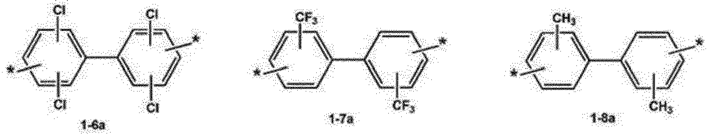

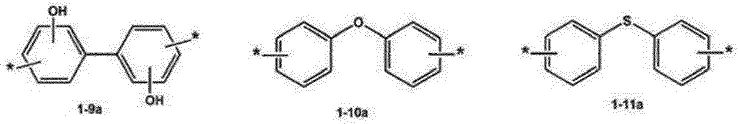

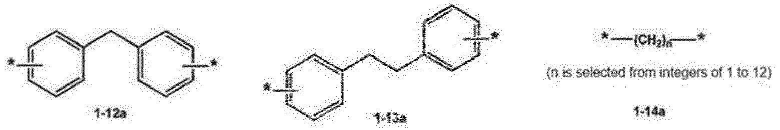

Specifically, (E)ₑ in Formula 1 may be selected from the groups represented by the following Formulae 1-lb to 1-13b, but it is not limited thereto.

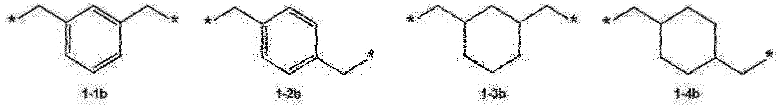

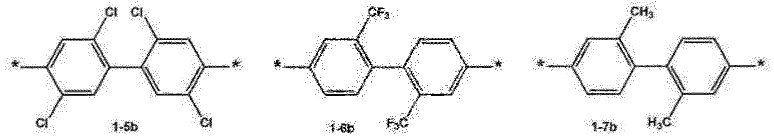

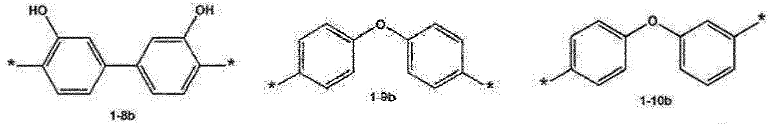

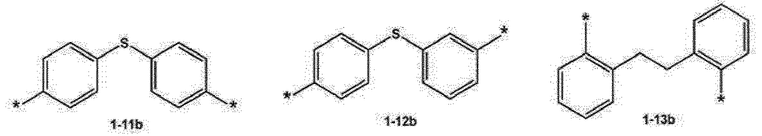

More specifically, (E)ₑ in Formula 1 may be the group represented by the above Formula 1-6b or the group represented by the above Formula 1-9b.

In an embodiment, the diamine compound may comprise a compound having a fluorine-containing substituent or a compound having an ether group (-O-).

The diamine compound may be composed of a compound having a fluorine-containing substituent. In such an event, the fluorine-containing substituent may be a fluorinated hydrocarbon group and specifically may be a trifluoromethyl group. But it is not limited thereto.

In another embodiment, one kind of diamine compound may be used as the diamine compound. That is, the diamine compound may be composed of a single component.

For example, the diamine compound may comprise 2,2'-bis(trifluoromethyl)-4,4'-diaminobiphenyl (TFDB) represented by the following formula, but it is not limited thereto.

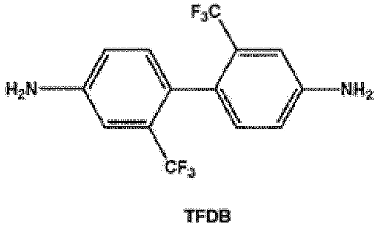

The dicarbonyl compound is not particularly limited, but it may be, for example, a compound represented by the following Formula 3.

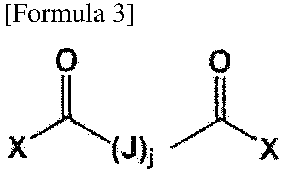

In Formula 3, J may be selected from a substituted or unsubstituted divalent C₆-C₃₀ aliphatic cyclic group, a substituted or unsubstituted divalent C₄-C₃₀ heteroaliphatic cyclic group, a substituted or unsubstituted divalent C₆-C₃₀ aromatic cyclic group, a substituted or unsubstituted divalent C₄-C₃₀ heteroaromatic cyclic group, a substituted or unsubstituted C₁-C₃₀ alkylene group, a substituted or unsubstituted C₂-C₃₀ alkenylene group, a substituted or unsubstituted C₂-C₃₀ alkynylene group, -O-, -S-, -C(=O)-, - CH(OH)-, -S(=O)₂-, -Si(CH₃)₂-, -C(CH₃)₂-, and -C(CF₃)₂-.
j is selected from integers of 1 to 5. When j is 2 or more, the Js may be the same as, or different from, each other.

X is a halogen atom. Specifically, X may be F, Cl, Br, I, or the like. More specifically, X may be Cl, but it is not limited thereto.

(J)ⱼ in the above Formula 3 may be selected from the groups represented by the following Formulae 3-1a to 3-14a, but it is not limited thereto.

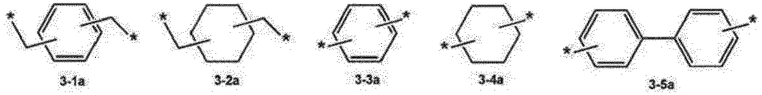

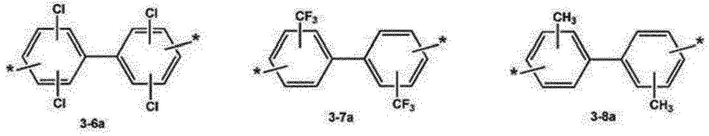

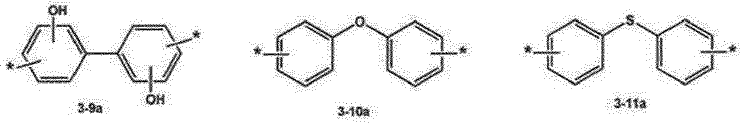

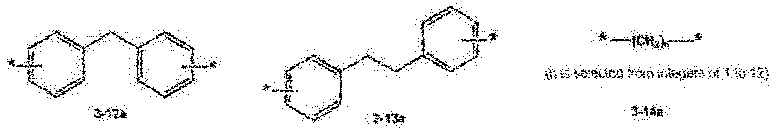

Specifically, (J)ⱼ in the above Formula 3 may be selected from the groups represented by the following Formulae 3-lb to 3-8b, but it is not limited thereto.

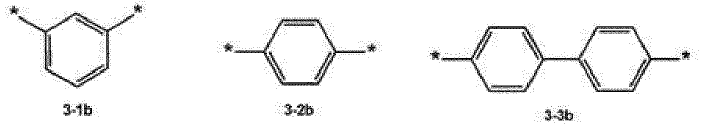

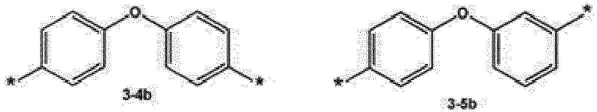

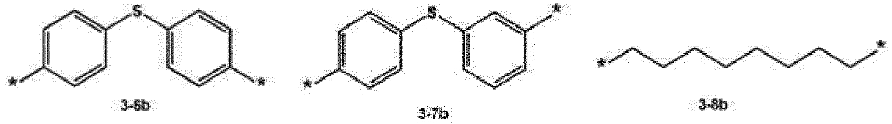

More specifically, (J)ⱼ in Formula 3 may be the group represented by the above Formula 3-1b, the group represented by the above Formula 3-2b, the group represented by the above Formula 3-3b, or the group represented by the above Formula 3-8b.

In an embodiment, a mixture of at least two kinds of dicarbonyl compounds different from each other may be used as the dicarbonyl compound. If two or more dicarbonyl compounds are used, at least two dicarbonyl compounds in which (J)ⱼ in the above Formula 3 is selected from the groups represented by the above Formulae 3-1b to 3-8b may be used as the dicarbonyl compound.

In another embodiment, the dicarbonyl compound may be an aromatic dicarbonyl compound that contains an aromatic structure.

The dicarbonyl compound may comprise terephthaloyl chloride (TPC), 1,1'-biphenyl-4,4'-dicarbonyl dichloride (BPDC), isophthaloyl chloride (IPC), as represented by the following formulae, or a combination thereof. But it is not limited thereto.

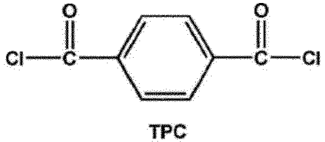

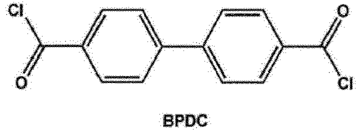

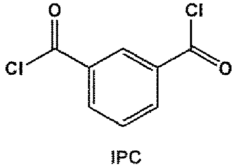

In an embodiment, the polyamide-based polymer may comprise two or more types of an amide-based repeat unit.

For example, the two or more types of an amide-based repeat unit may comprise a first amide-based repeat unit and a second amide-based repeat unit. The first amide-based repeat unit may be formed by reacting a first dicarbonyl compound with the diamine compound. The second amide-based repeat unit may be formed by reacting a second dicarbonyl compound with the diamine compound.

The first dicarbonyl compound and the second dicarbonyl compound may be compounds different from each other.

The first dicarbonyl compound and the second dicarbonyl compound may comprise two carbonyl groups, respectively. The angle between the two carbonyl groups contained in the first dicarbonyl compound may be greater than the angle between the two carbonyl groups contained in the second dicarbonyl compound.

In exemplary examples, the first dicarbonyl compound and the second dicarbonyl compound may be structural isomers to each other. As two kinds of dicarbonyl compounds in a structural isomeric relationship are used, a polyamide-based polymer satisfying the above distance between lattice planes can be formed, thereby enhancing the optical properties and mechanical properties of the polyamide-based polymer.

The first dicarbonyl compound and the second dicarbonyl compound may be an aromatic dicarbonyl compound, respectively.

For example, the first dicarbonyl compound and the second dicarbonyl compound may be aromatic dicarbonyl compounds different from each other, but they are not limited thereto.

If the first dicarbonyl compound and the second dicarbonyl compound are an aromatic dicarbonyl compound, respectively, they comprise a benzene ring. Thus, they can contribute to improvements in the mechanical properties such as surface hardness and tensile strength of a film that comprises the polyamide-based polymer thus produced.

For example, the angle between the two carbonyl groups contained in the first dicarbonyl compound may be 160° to 180°, and the angle between the two carbonyl groups contained in the second dicarbonyl compound may be 80° to 140°.

For example, the dicarbonyl compound may comprise a first dicarbonyl compound and/or a second dicarbonyl compound.

For example, the first dicarbonyl compound may comprise TPC, and the second dicarbonyl compound may comprise IPC, but they are not limited thereto.

If TPC is used as the first dicarbonyl compound and IPC is used as the second dicarbonyl compound in a proper combination, a film that comprises the polyamide-based resin thus produced may have high oxidation resistance, productivity, light transmittance, transparency, and modulus, and it may have low haze.

The diamine compound and the dicarbonyl compound may be polymerized to form a repeat unit represented by the following Formula B.

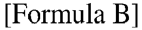

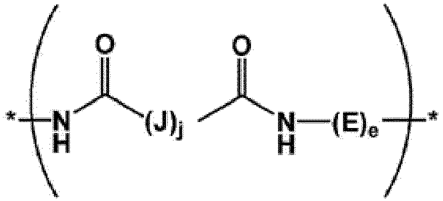

In Formula B, E, J, e, and j are as described above.

For example, the diamine compound and the dicarbonyl compound may be polymerized to form amide repeat units represented by the following Formulae B-1 and B-2.

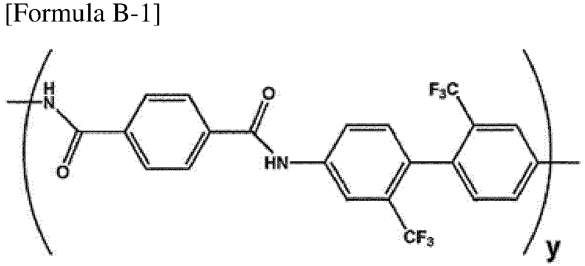

In Formula B-1, y is an integer of 1 to 400.

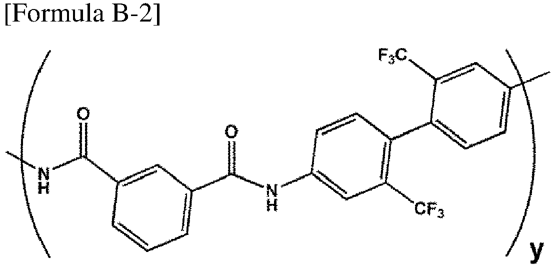

In Formula B-2, y is an integer of 1 to 400.

In some embodiments, the molar ratio of the first amide-based repeat unit to the second amide-based repeat unit may be 10:90 to 90:10. As the molar ratio of the first and second amide-based repeat units is set to the above range, the distance between lattice planes of the polyamide-based polymer may be adjusted to the above range. Accordingly, it is possible to improve the physical properties such as haze, light transmittance, yellow index, and modulus of the polyamide-based film. Preferably, the molar ratio of the first amide-based repeat unit to the second amide-based repeat unit may be 25:75 to 80:20, 40:60 to 80:20, or 50:50 to 75:25.

In some embodiments, the polyamide-based film may have a thickness deviation of 4 µm or less based on a thickness of 50 µm. The thickness deviation may refer to a deviation between the maximum or minimum value with respect to the average of thicknesses measured at 10 random points of the film. In such a case, as the polyamide-based film has a uniform thickness, its optical properties and mechanical properties at each point may be uniformly exhibited.

The polyamide-based film may have a haze of 1% or less. For example, the haze may be 0.5% or less or 0.4% or less, but it is not limited thereto.

The polyamide-based film may have a transmittance of 80% or more. For example, the transmittance may be 82% or more, 85% or more, 88% or more, 89% or more, 80% to 99%, 88% to 99%, or 89% to 99%, but it is not limited thereto.

The polyamide-based film may have a yellow index of 3.5 or less. For example, the yellow index may be 3 or less, 2.5 or less, or 2 or less, but it is not limited thereto.

The polyamide-based film may have a modulus of 5 GPa or more. Specifically, the modulus may be 5.5 GPa or more or 6.0 GPa or more, but it is not limited thereto.

The polyamide-based film may have a compressive strength of 0.4 kgf/µm or more. Specifically, the compressive strength may be 0.45 kgf/µm or more, or 0.46 kgf/µm or more, but it is not limited thereto.

When the polyamide-based film is perforated at a speed of 10 mm/min using a 2.5-mm spherical tip in a UTM compression mode, the maximum diameter (mm) of perforation including a crack may be 60 mm or less. Specifically, the maximum diameter of perforation may be 5 mm to 60 mm, 10 mm to 60 mm, 15 mm to 60 mm, 20 mm to 60 mm, 25 mm to 60 mm, or 25 mm to 58 mm, but it is not limited thereto.

The polyamide-based film may have a surface hardness of HB or higher. Specifically, the surface hardness may be H or higher, or 2H or higher, but it is not limited thereto.

The polyamide-based film may have a tensile strength of 15 kgf/mm² or more. Specifically, the tensile strength may be 18 kgf/mm² or more, 20 kgf/mm² or more, 21 kgf/mm² or more, or 22 kgf/mm² or more, but it is not limited thereto.

The polyamide-based film may have an elongation of 15% or more. Specifically, the elongation may be 16% or more, 17% or more, or 17.5% or more, but it is not limited thereto.

The polyamide-based film according to an embodiment has excellent optical properties in terms of low haze, low yellow index, and high transmittance, as well as excellent mechanical properties such as scratch resistance and/or modulus. Thus, it can be advantageously applied to, for example, a flexible or foldable display device.

The physical properties of the polyamide-based film as described above are based on a thickness of 40 µm to 60 µm. For example, the physical properties of the polyamide-based film are based on a thickness of 50 µm.

The features on the components and properties of the polyamide-based film as described above may be combined with each other.

For example, the polyamide-based film comprises a polyamide-based polymer and may have a transmittance of 80% or more, a haze of 1% or less, and a yellow index of 3.5 or less or 3 or less.

In addition, the characteristics on an XRD pattern and an IR spectrum and the properties of the polyamide-based film as described above may be the results materialized by combinations of the chemical and physical properties of the components, which constitute the polyamide-based film, along with the conditions in each step of the process for preparing the polyamide-based film as described below.

For example, the composition and content of the components that constitute the polyamide-based film, the polymerization conditions and thermal treatment conditions in the film preparation process, and the like are all combined to achieve the desired characteristics on an XRD pattern and an IR spectrum.

In some embodiments, the molecular structure of the polyamide-based polymer may vary depending on the amount of the first dicarbonyl compound and the second dicarbonyl compound and polymerization conditions. In such a case, the ratio of the first hydrogen bonding groups to the second hydrogen bonding groups may be changed; thus, the ratio of the area of the first IR peak to the area of the second IR peak may be adjusted.

### Cover window for a display device

The cover window for a display device according to an embodiment comprises a polyamide-based film and a functional layer.

The polyamide-based film according to some embodiments comprises a polyamide-based polymer and has a first peak having a maximum value in a section where 2θ is 10° to less than 20° on an XRD graph, wherein the first XRD peak may have a full width at half maximum of 6° or less.

Details on the polyamide-based film are as described above.

The cover window for a display device can be advantageously applied to a display device.

As the polyamide-based film has the characteristics described above in terms of the locations and full width at half maximum of peaks on an XRD analysis pattern, it may have excellent optical and mechanical properties.

The polyamide-based film according to some embodiments comprises a polyamide-based polymer and has a first IR peak having a maximum value in a section where the wavenumber is 2,950 cm⁻¹ to 2,900 cm⁻¹ and a second IR peak having a maximum value in a section where the wavenumber is 2,875 cm⁻¹ to 2,825 cm⁻¹ on an IR spectrum, wherein the area of the first IR peak may be 1.4 times or less relative to the area of the second IR peak.

As the polyamide-based film has the characteristics described above in terms of the ratio of the areas of peaks located in a section where the wavenumber is 3,000 cm⁻¹ to 2,800 cm⁻¹ on an IR spectrum, it may have excellent optical and mechanical properties.

### Display device

The display device according to an embodiment comprises a display unit; and a cover window disposed on the display unit, wherein the cover window comprises a polyamide-based film and a functional layer.

The polyamide-based film according to some embodiments comprises a polyamide-based polymer and has a first peak having a maximum value in a section where 2θ is 10° to less than 20° on an XRD graph, wherein the first XRD peak may have a full width at half maximum of 6° or less.

The polyamide-based film according to some embodiments comprises a polyamide-based polymer and has a first IR peak having a maximum value in a section where the wavenumber is 2,950 cm⁻¹ to 2,900 cm⁻¹ and a second IR peak having a maximum value in a section where the wavenumber is 2,875 cm⁻¹ to 2,825 cm⁻¹ on an IR spectrum, wherein the area of the first IR peak is 1.4 times or less relative to the area of the second IR peak.

Details on the polyamide-based film and the cover window are as described above.

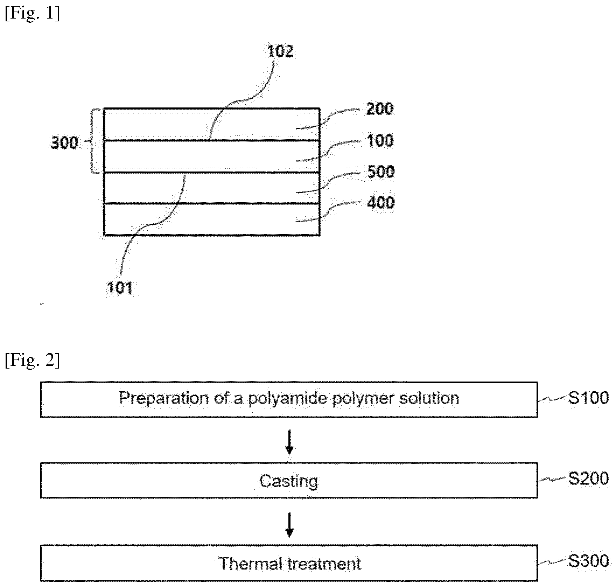

Fig. 1 is a cross-sectional view of a display device according to an embodiment.

Specifically, Fig. 1 illustrates a display device, which comprises a display unit (400) and a cover window (300) disposed on the display unit (400), wherein the cover window comprises a polyamide-based film (100) having a first side (101) and a second side (102) and a functional layer (200), and an adhesive layer (500) is interposed between the display unit (400) and the cover window (300).

The display unit (400) is for displaying an image, and it may have flexible characteristics.

The display unit (400) may be a display panel for displaying an image. For example, it may be a liquid crystal display panel or an organic electroluminescent display panel. The organic electroluminescent display panel may comprise a front polarizing plate and an organic EL panel.

The front polarizing plate may be disposed on the front side of the organic EL panel. Specifically, the front polarizing plate may be attached to the side on which an image is displayed in the organic EL panel.

The organic EL panel may display an image by self-emission of a pixel unit. The organic EL panel may comprise an organic EL substrate and a driving substrate. The organic EL substrate may comprise a plurality of organic electroluminescent units, each of which corresponds to a pixel. Specifically, it may comprise a cathode, an electron transport layer, a light-emitting layer, a hole transport layer, and an anode. The driving substrate is operatively coupled to the organic EL substrate. That is, the driving substrate may be coupled to the organic EL substrate so as to apply a driving signal such as a driving current, so that the driving substrate can drive the organic EL substrate by applying a current to the respective organic electroluminescent units.

In addition, an adhesive layer (500) may be interposed between the display unit (400) and the cover window (300). The adhesive layer may be an optically transparent adhesive layer, but it is not particularly limited.

The cover window (300) may be disposed on the display unit (400). The cover window is located at the outermost position of the display device to thereby protect the display unit.

The cover window (300) may comprise a polyamide-based film and a functional layer. The functional layer may be at least one selected from the group consisting of a hard coating layer, a reflectance reducing layer, an antifouling layer, and an antiglare layer. The functional layer may be coated on at least one side of the polyamide-based film.

The polyamide-based film according to an embodiment can be applied in the form of a film to the outside of a display device without changing the display driving method, the color filter inside the panel, or the laminated structure, thereby providing a display device having excellent scratch resistance, light transmittance, transparency, and/or low haze. Since neither significant process changes nor cost increases are needed, it is advantageous in that the production costs can be reduced.

The polyamide-based film according to an embodiment may be excellent in optical properties in terms of high transmittance, low haze, and low yellow index, as well as may have excellent scratch resistance and/or modulus.

In addition, the polyamide-based film according to an embodiment can minimize the optical distortion since it has at most a certain level of in-plane retardation and a thickness direction retardation and can also reduce the light leakage from a lateral side.

In particular, as the screen size of a display device increases or a flexible cover window for a flexible/foldable display is required, mechanical properties such as excellent surface strength are required. The polyamide-based film according to the embodiments has excellent scratch resistance, modulus, and/or optical properties, so that it can be advantageously applied to a display device with a large area or a foldable or flexible displace device.

### Process for preparing a polyamide-based film

An embodiment provides a process for preparing a polyamide-based film.

The process for preparing a polyamide-based film according to an embodiment comprises polymerizing a diamine compound and a dicarbonyl compound to prepare a solution comprising a polyamide-based polymer in an organic solvent; casting the polymer solution to prepare a gel sheet; and thermally treating the gel sheet.

Referring to Fig. 2, the process for preparing a polyamide-based film according to an embodiment comprises polymerizing a diamine compound and a dicarbonyl compound in an organic solvent to prepare a solution comprising a polyamide-based polymer (S100); casting the polymer solution to prepare a gel sheet (S200); and thermally treating the gel sheet (S300).

The polyamide-based film is a film in which a polyamide-based polymer is a main component. The polyamide-based polymer is a resin that comprises an amide repeat unit as a structural unit. Optionally, the polyamide-based polymer may comprise an imide repeat unit.

In the process for preparing a polyamide-based film, the polymer solution for preparing a polyamide-based polymer may be prepared by simultaneously or sequentially mixing a diamine compound and a dicarbonyl compound in an organic solvent in a reactor, and reacting the mixture (S100).

In an embodiment, the polymer solution may be prepared by simultaneously mixing and reacting a diamine compound and a dicarbonyl compound in an organic solvent.

In another embodiment, the step of preparing the polymer solution may comprise mixing and reacting the diamine compound and the dicarbonyl compound in a solvent to produce a polyamide (PA) solution. The polyamide solution is a solution that comprises a polymer having an amide repeat unit.

In an embodiment, the step of preparing the polymer solution may be carried out by using two kinds of dicarbonyl compounds different from each other as the dicarbonyl compound. In such a case, the two kinds of dicarbonyl compounds may be mixed and reacted simultaneously or sequentially. Preferably, the first dicarbonyl compound and the diamine compound may react to form a prepolymer, and the prepolymer and the second dicarbonyl compound may react to form the polyamide-based polymer. In such a case, a polyamide-based polymer and a polyamide-based film, in which a peak on an XRD pattern has the location and full width at half maximum, or peaks in a specific section on an IR pattern have the area ratio as described above, can be effectively prepared.

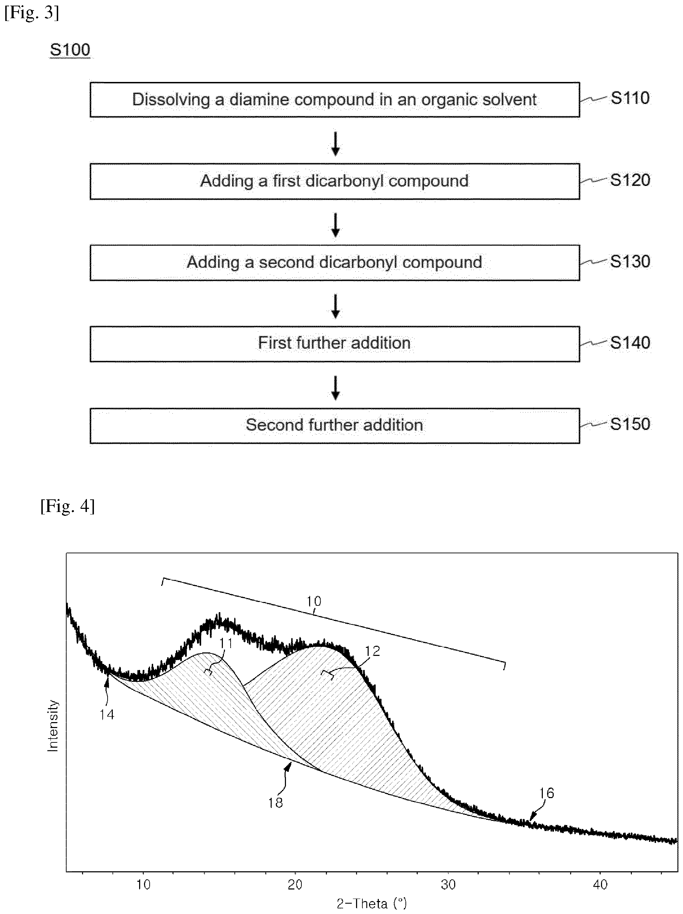

Fig. 3 is a schematic flow diagram that illustrates the steps for preparing a polyamide-based polymer solution according to some embodiments. Referring to Fig. 3, the dicarbonyl compound may be added through at least four steps (e.g., S120 to S150).

The step of preparing a polymer solution (S100) may comprise adding and dissolving a diamine compound in an organic solvent (S110), adding a first dicarbonyl compound and reacting under stirring (S120), adding a second dicarbonyl compound after step S120 and stirring it to prepare a first polymer solution (S130), further adding the first dicarbonyl compound or the second dicarbonyl compound and stirring it to prepare a second polymer solution (S140), and secondly adding the first dicarbonyl compound or the second dicarbonyl compound and stirring it to prepare a third polymer solution (S150).

For example, a schematic molecular structure and/or molecular weight of the polyamide-based polymer may be achieved through steps S 110 to S130. The viscosity of the polyamide-based polymer solution is adjusted, and the location and full width at half maximum of a peak on an XRD pattern and/or the area ratio of peaks located in the section of wavenumber 3,000 cm⁻¹ to 2,800 cm⁻¹ on an IR spectrum can be precisely controlled through steps S140 and S150. It is possible to form a polyamide-based film having desired optical and mechanical properties through the above.

In an embodiment, the viscosity of the polymer solution may be adjusted to 200,000 cps to 350,000 cps at room temperature. In such an event, the film-forming capability of a polyamide-based film can be enhanced, thereby enhancing the thickness uniformity and/or scratch resistance.

In some embodiments, different dicarbonyl compounds may be used in the step of preparing the second polymer solution (S140) and in the step of preparing the third polymer solution (S150). For example, if the first dicarbonyl compound is used in the step of preparing the second polymer solution (S 140), the second dicarbonyl compound may be used in the step of preparing the third polymer solution (S150). If the second dicarbonyl compound is used in the step of preparing the second polymer solution (S140), the first dicarbonyl compound may be used in the step of preparing the third polymer solution (S150). Preferably, after the second dicarbonyl compound is reacted with the reactant in step S120, the first dicarbonyl compound is used in step S130 to adjust the XRD and/or IR pattern characteristics of the polyamide-based polymer within the ranges described above.

In the steps of preparing the first polymer solution, the second polymer solution, and the third polymer solution, the polymer solutions may have viscosities different from each other. For example, the second polymer solution may have a viscosity higher than that of the first polymer solution. The third polymer solution may have a viscosity higher than that of the second polymer solution.

In the steps of preparing the first polymer solution, the second polymer solution, and the third polymer solution, the stirring speeds may be different from each other. For example, the stirring speed when the first polymer solution is prepared may be faster than the stirring speed when the second polymer solution and/or the third polymer solution is prepared.

The polymer contained in the polymer solution comprises an amide repeat unit derived from the polymerization of the diamine compound and the dicarbonyl compound.

Alternatively, the polymer contained in the polymer solution may comprise an imide repeat unit derived from the polymerization of the diamine compound and the dianhydride compound and an amide repeat unit derived from the polymerization of the diamine compound and the dicarbonyl compound.

In an embodiment, the step of preparing the solution comprising a polyamide-based polymer may be carried out at a temperature of -10 to 25°C. For example, the mixing and reaction of the solvent, the diamine compound, and the dicarbonyl compound may be carried out at a temperature of -10°C to 25°C. If the above temperature range is not satisfied, the location and full width at half maximum of a peak on an XRD pattern may be outside the above ranges.

In an embodiment, the step of preparing the solution comprising a polyamide-based polymer may be carried out at a temperature of -20°C to 25°C. For example, the mixing and reaction of the solvent, the diamine compound, and the dicarbonyl compound may be carried out at a temperature of -20°C to 25°C. If the above temperature range is not satisfied, the ratio of the areas of peaks located in a section where the wavenumber is 3,000 cm⁻¹ to 2,800 cm⁻¹ on an IR spectrum may be outside the ranges. Thus, such properties as modulus and yellow index of the polyamide-based film may be deteriorated. In addition, the viscosity of the polymer solution may be less than a predetermined range, thereby increasing the thickness deviation of a film formed therefrom. Preferably, the step of preparing the solution comprising a polyamide-based polymer may be carried out at a temperature of -20°C to 20°C, -20°C to 15°C, -20°C to 10°C, -15°C to 20°C, -15°C to 15°C, -15°C to 10°C, -10°C to 20°C, -10°C to 15°C, -10°C to 10°C, -8°C to 20°C, -8°C to 15°C, -8°C to 10°C, -5°C to 20°C, -5°C to 15°C, or -5°C to 10°C.

The content of solids contained in the polymer solution may be 10% by weight to 30% by weight, but it is not limited thereto.

If the content of solids contained in the polymer solution is within the above range, a polyamide-based film can be effectively produced in the extrusion and casting steps. In addition, the polyamide-based film thus produced may have mechanical properties in terms of an improved modulus and the like and optical properties in terms of a low yellow index and the like.

In still another embodiment, the step of preparing the polymer solution may further comprise adjusting the pH of the polymer solution. In this step, the pH of the polymer solution may be adjusted to 4 to 7, for example, 4.5 to 7.

The pH of the polymer solution may be adjusted by adding a pH adjusting agent. The pH adjusting agent is not particularly limited and may include, for example, amine-based compounds such as alkoxyamine, alkylamine, and alkanolamine.

As the pH of the polymer solution is adjusted to the above range, it is possible to prevent the occurrence of defects in the film produced from the polymer solution and to achieve the desired optical properties and mechanical properties in terms of yellow index and modulus.

The pH adjusting agent may be employed in an amount of 0.1% by mole to 10% by mole based on the total number of moles of monomers in the polymer solution.

In some embodiments, the molar ratio of the first dicarbonyl compound to the second dicarbonyl compound for the preparation of the polymer solution may be 10:90 to 90:10, preferably, 25:75 to 80:20, 40:60 to 80:20, or 50:50 to 75:25. The molar ratio may be determined based on the total number of moles of the first dicarbonyl compound and the second dicarbonyl compounds added in each step, for example, when the first and second dicarbonyl compounds are added in four or more steps.

In some embodiments, the molar ratio of the first dicarbonyl compound to the second dicarbonyl compound for the preparation of the polymer solution may be 10:90 to 79:21, preferably, 30:70 to 79:21, 40:60 to 79:21, or 50:50 to 75:25. The molar ratio may be determined based on the total number of moles of the first dicarbonyl compound and the second dicarbonyl compounds added in each step, for example, when the first and second dicarbonyl compounds are added in four or more steps.

In some embodiments, the amount of the first dicarbonyl compound or the second dicarbonyl compound added in the step of preparing the second polymer solution (S140) may be 0.5 to 15% by mole based on the total number of moles of the dicarbonyl compounds. In such a case, the location and full width at half maximum of a peak on an XRD pattern and/or the area ratio of peaks on an IR spectrum can be precisely controlled. Preferably, the amount of the dicarbonyl compound added in the step of preparing the second polymer solution (S140) may be 0.5% by mole to 10% by mole, 0.5% by mole to 5% by mole, 1% by mole to 3% by mole, or 0.5% by mole to 3% by mole.

In some embodiments, the amount of the first dicarbonyl compound or the second dicarbonyl compound added in the step of preparing the third polymer solution (S150) may be 0.5 to 15% by mole based on the total number of moles of the dicarbonyl compounds. In such a case, the location and full width at half maximum of a peak on an XRD pattern and/or the area ratio of peaks on an IR spectrum can be precisely controlled. Preferably, the amount of the dicarbonyl compound added in the step of preparing the third polymer solution (S150) may be 0.5 to 10% by mole, 0.5 to 5% by mole, 1 to 3% by mole, or 0.5 to 3% by mole.

As the first dicarbonyl compound and the second dicarbonyl compound are used at such a ratio, it is possible to prepare a polyamide-based polymer and a film having an XRD pattern and/or an IR spectrum as described above and to improve the scratch resistance, modulus, haze, light transmittance, yellow index, and the like of the polyamide-based film.

If the above range is not satisfied, such optical properties as luminance and haze and such mechanical properties as scratch resistance and modulus may be deteriorated.

Details on the diamine compound and the dicarbonyl compound are as described above.

In an embodiment, the organic solvent may be at least one selected from the group consisting of dimethylformamide (DMF), dimethylacetamide (DMAc), N-methyl-2-pyrrolidone (NMP), m-cresol, tetrahydrofuran (THF), and chloroform. The organic solvent employed in the polymer solution may be dimethylacetamide (DMAc), but it is not limited thereto.

The polymer solution may be stored at -20°C to 20°C, -20°C to 10°C, -20°C to 5°C, -20°C to 0°C, or 0°C to 10°C.

If it is stored at the above temperature, it is possible to prevent degradation of the polymer solution and to lower the moisture content to thereby prevent defects of a film produced therefrom.

In an embodiment, the polyamide-based polymer solution may be degassed. The step of degassing may remove moisture in the polymer solution and reduce impurities, thereby increasing the reaction yield and imparting excellent surface appearance and mechanical properties to the film finally produced.

The degassing may comprise vacuum degassing or purging with an inert gas.

The vacuum degassing may be carried out for 30 minutes to 3 hours after depressurizing the internal pressure of the tank in which the polymer solution is contained to 0.1 bar to 0.7 bar. The vacuum degassing under these conditions may reduce bubbles in the polymer solution. As a result, it is possible to prevent surface defects of the film produced therefrom and to achieve excellent optical properties such as haze.

Specifically, the purging may be carried out by purging the tank with an inert gas at an internal pressure of 1 atm to 2 atm. The purging under these conditions may remove moisture in the polymer solution, reduce impurities to thereby increase the reaction yield, and achieve excellent optical properties such as haze and mechanical properties.

The inert gas may be at least one selected from the group consisting of nitrogen, helium (He), neon (Ne), argon (Ar), krypton (Kr), xenon (Xe), and radon (Rn), but it is not limited thereto. Specifically, the inert gas may be nitrogen.

The vacuum degassing and the purging with an inert gas may be carried out in separate steps.

For example, the step of vacuum degassing may be carried out, followed by the step of purging with an inert gas, but it is not limited thereto.

The vacuum degassing and/or the purging with an inert gas may improve the physical properties of the surface of a polyamide-based film thus produced.

Once the solution comprising a polyamide-based polymer in an organic solvent has been prepared as described above, a filler may be added to the solution.

The filler has an average particle diameter of 60 nm to 180 nm and a refractive index of 1.55 to 1.75. The content thereof is 100 ppm to 3,000 ppm based on the total weight of the solids content of the polyamide-based polymer. In addition, the filler may be silica or barium sulfate.

Details on the filler are as described above.

The polymer solution may be cast to prepare a gel sheet (S200).

For example, the polymer solution may be extruded, coated, and/or dried on a support to form a gel sheet.

In addition, the casting thickness of the polymer solution may be 200 µm to 700 µm. As the polymer solution is cast to a thickness within the above range, the final film produced after the drying and thermal treatment may have an appropriate and uniform thickness.

The polymer solution may have a viscosity of 200,000 cps to 350,000 cps at room temperature as described above. As the viscosity satisfies the above range, the polymer solution can be cast to a uniform thickness without defects, and a polyamide-based film having a substantially uniform thickness can be formed without local/partial thickness variations during drying.

The polymer solution is cast and then dried at a temperature of 60°C to 150°C for 5 minutes to 60 minutes to prepare a gel sheet. Specifically, the polymer solution is dried at a temperature of 70°C to 90°C for 15 minutes to 40 minutes to prepare a gel sheet.

The solvent of the polymer solution may be partially or totally volatilized during the drying to prepare the gel sheet.

The dried gel sheet may be thermally treated to form a polyamide-based film (S300).

The thermal treatment of the gel sheet may be carried out, for example, through a thermosetting device.

The thermosetting device may thermally treat the gel sheet through hot air.

If the thermal treatment is carried out with hot air, the heat may be uniformly supplied. If the heat is not uniformly supplied, a satisfactory surface roughness cannot be achieved, which may raise or lower the surface tension too much.

The thermal treatment of the gel sheet may be carried out in a temperature range of 60°C to 500°C for 5 minutes to 200 minutes. Specifically, the thermal treatment of the gel sheet may be carried out in a temperature range of 80°C to 300°C at a temperature elevation rate of 1.5°C/minute to 20°C/minute for 10 minutes to 150 minutes.

In such an event, the initial temperature of the thermal treatment of the gel sheet may be 60°C or higher. Specifically, the initial temperature of the thermal treatment of the gel sheet may be 80°C to 180°C.

In addition, the maximum temperature in the thermal treatment may be 300°C to 500°C. For example, the maximum temperature in the thermal treatment may be 350°C to 500°C, 380°C to 500°C, 400°C to 500°C, 410°C to 480°C, 410°C to 470°C, or 410°C to 450°C.

According to an embodiment, the thermal treatment of the gel sheet may be carried out in two or more steps.

Specifically, the thermal treatment may comprise a first hot air treatment step carried out for 5 minutes to 30 minutes in a range of 60°C to 120°C; and a second hot air treatment step carried out for 10 minutes to 120 minutes in a range of 120°C to 350°C.

The thermal treatment under these conditions may cure the gel sheet to have appropriate surface hardness and modulus and may secure high light transmittance, low haze, and an appropriate level of glossiness of the cured film at the same time.

According to an embodiment, the thermal treatment may comprise passing it through an IR heater. The thermal treatment by an IR heater may be carried out for 1 minute to 30 minutes in a temperature range of 300°C or higher. Specifically, the thermal treatment by an IR heater may be carried out for 1 minute to 20 minutes in a temperature range of 300°C to 500°C.

The polyamide-based film is prepared by the preparation process as described above such that it is excellent in optical properties and mechanical properties. The polyamide-based film can be applied to various uses that require flexibility, transparency, and a certain level of luminance. For example, the polyamide-based film can be applied to solar cells, displays, semiconductor devices, sensors, and the like.

In particular, since the polyamide-based film has excellent modulus and scratch resistance and/or optical properties, it can be advantageously applied to a cover window for a display device and to a display device. Since it has excellent folding characteristics, it can be advantageously applied to a foldable display device or a flexible display device.

Details on the polyamide-based film prepared by the process for preparing a polyamide-based film are as described above.

### Mode for the Invention

Hereinafter, the above description will be described in detail by referring to examples. But the following Examples are intended to illustrate the present invention, and the scope of the Examples is not limited thereto only.

### [Example]

### Example 1

A 1-liter glass reactor equipped with a temperature-controllable double jacket was charged with 567 g of dimethylacetamide (DMAc) as an organic solvent at 10°C under a nitrogen atmosphere. Then, 64.0 g (0.200 mole) of 2,2'-bis(trifluoromethyl)-4,4'-diaminobiphenyl (TFDB) as an aromatic diamine was slowly added thereto and dissolved.

Subsequently, terephthaloyl chloride (TPC) as a first dicarbonyl compound in an amount of 48.5% by mole of the total number of moles of dicarbonyl compounds used in the polymerization was slowly added, followed by stirring the mixture for 1 hour. Then, isophthaloyl chloride (IPC) as a second dicarbonyl compound in an amount of 48.5% by mole of the total number of moles of dicarbonyl compounds used in the polymerization was added, followed by stirring the mixture for 1 hour, thereby preparing a first polymer solution.

A TPC solution and an IPC solution at a concentration of 10% by weight in a DMAc organic solvent were prepared, respectively.
1 ml of the TPC solution was added to the first polymer solution, followed by stirring the mixture for 30 minutes, which procedure was repeated, whereby about 1.5% by mole of TPC based on the total number of moles of dicarbonyl compounds was reacted to prepare a second polymer solution.
1 ml of the IPC solution was added to the second polymer solution, followed by stirring the mixture for 30 minutes, which procedure was repeated, whereby about 1.5% by mole of IPC based on the total number of moles of dicarbonyl compounds was reacted to prepare a third polymer solution. Here, the reaction temperature (polymerization temperature) of the first, second, and third polymer solutions was adjusted to about 10°C, and the reaction was terminated when the viscosity of the third polymer solution reached about 200,000 cps.

While the temperature of the polymer solution (varnish) was maintained at 10°C, the viscosity was measured using a viscometer of TOKI SANGYO's BH-II Model. The rpm was set to 4, and it was checked whether the target viscosity was achieved using spindle number 7.

The third polymer solution was coated onto a glass plate and then dried. The dried polyamide polymer was peeled off from the glass plate and thermally treated, whereby a polyamide-based film having a thickness of 50 µm was obtained.

As to the contents of the diamine compound (TFMB) and the dicarbonyl compounds (IPC and TPC), the number of moles and the sequence of addition of the dicarbonyl compounds based on 100 moles of the diamine compound are shown in Table 1 below.

The dicarbonyl compounds were added in the order shown in Table 1 below (in the order from top to bottom), followed by stirring thereof. For example, in Example 1, after the diamine compound was added and dissolved in an organic solvent, the steps of adding 48.5% by mole of TPC and stirring thereof, adding 48.5% by mole of IPC and stirring thereof, adding 1.5% by mole of TPC and stirring thereof, and adding 1.5% by mole of IPC and stirring thereof were carried out sequentially.

### Examples 2 and 3, and Comparative Examples 1 to 3

Films were each prepared in the same manner as in Example 1, except that the contents of the respective reactants and the sequence and amount of the dicarbonyl compounds were changed as shown in Table 1 below.

**[Table 1]**

| | Ex. 1 | Ex. 2 | Ex. 3 | C. Ex. 1 | C. Ex. 2 | C. Ex. 3 |
|---|---|---|---|---|---|---|
| Diamine compound (% by mole) | TFMB 100 | TFMB 100 | TFMB 100 | TFMB 100 | TFMB 100 | TFMB 100 |
| Dicarbonyl compound (% by mole) | TPC 48.5 | TPC 58.2 | TPC 72.8 | IPC 5 | TPC 91 | TPC 4.5 |
| | IPC 48.5 | IPC 38.8 | IPC 24.3 | TPC 72.8 | IPC 4.5 | IPC 91 |
| | TPC 1.5 | TPC 1.8 | TPC 2.2 | IPC 20 | TPC 4 | TPC 0.5 |
| | IPC 1.5 | IPC 1.2 | IPC 0.7 | TPC 2.2 | IPC 0.5 | IPC 4 |

### [Evaluation Example]

The films prepared in the Examples and Comparative Examples were each measured and evaluated for the following properties. The results are shown in Table 2 below.

### Evaluation Example 1: Measurement of film thickness

The thickness was measured at 10 random points using a digital micrometer 547-401 manufactured by Mitutoyo Corporation. Their average value was adopted as the thickness.

### Evaluation Example 2: Measurement of modulus

A sample was cut out by at least 10 cm or more in the direction perpendicular to the main shrinkage direction of the film and by 10 mm in the main shrinkage direction. It was fixed by the clips disposed at an interval of 10 cm in a universal testing machine UTM 5566A of Instron. A stress-strain curve was obtained until the sample was fractured while it was stretched at a speed of 12.5 mm/minute at room temperature. The slope of the load with respect to the initial strain on the stress-strain curve was taken as the modulus (GPa). The modulus was measured at room temperature (about 20°C to 25°C).

### Evaluation Example 3: Measurement of transmittance and haze

The light transmittance and haze were measured using a haze meter NDH-5000W manufactured by Nippon Denshoku Kogyo in accordance with the JIS K 7105, JIS K 7136, and JIS K 7161 standards.

### Evaluation Example 4: Measurement of yellow index

The yellow index (YI) was measured with a spectrophotometer (UltraScan PRO, Hunter Associates Laboratory) under the conditions of d65 and 10° in accordance with ASTM-E313.

### Evaluation Example 5: Analysis of XRD (X-ray diffraction crystallography)

The polyamide-based films according to the Examples and Comparative Examples were each subjected to an XRD analysis. Here, Ultima IV of Rigaku was used, and the analysis conditions were set as follows.
- Scan source: Cu (40 kV, 30 mA)
- Scan range (2-Theta): 5° to 45°
- Scan size: 0.02°
- Scan speed: 0.24°/sec

Fig. 4 is an XRD analysis graph (diffractogram) of the polyamide-based film of Example 2.

Referring to Fig. 4, a combined XRD peak (10) in which two XRD peaks were combined was observed in a section where 2θ was about 5° to 35°.

The combined XRD peak (10) was separated into a first XRD peak (11) and a second XRD peak (12). The maximum value of the first XRD peak (11) was located in a section (first section) where 2θ was 10° to less than 20°, and the maximum value of the second XRD peak (12) was located in a section (second section) where 2θ was 20° to 25°. The combined XRD peak (10) was separated such that the first XRD peak (11) and the second XRD peak (12) had the form of a Gaussian distribution with respect to the baseline (18).

The starting point (14; the point where 2θ was about 5°) and the ending point (15; the point where 2θ was about 35°) of the combined XRD peak (10) was connected with an arbitrary line having an exponential function (e.g., y = ae^{x} + b wherein a and b are constants). The baseline (18) was set by connecting with the XRD pattern of the section excluding the combined XRD peak.

In the first XRD peak (11) and the second XRD peak (12), the full width at half maximum (FWHM) of a portion having an intensity value greater than that of the baseline (18) was analyzed using an analysis program.

In addition, the percentage of the full width at half maximum of the first XRD peak (11) to the sum of the full width at half maximum of the first XRD peak (11) and the full width at half maximum of the second XRD peak (12) is shown in Table 2 below.

### Evaluation Example 6: Evaluation of scratch resistance

A pencil hardness tester of Kipae ENT and Pressure-Proofed Hi-Density Lead Pencil of Mitsubishi Japan were used. A pencil having a hardness of H was set to form a contact angle of about 45° against a film, and the surface of the film was evaluated by scratching five times for a measuring area of 40 mm at a speed of 300 mm per minute under a load of 750 g. If no scratches were formed on the film surface, it was evaluated as "good." If scratches were formed on the film surface, it was evaluated as "poor."

**[Table 2]**

| | Ex. 1 | Ex. 2 | Ex. 3 | C. Ex. 1 | C. Ex. 2 | C. Ex. 3 |
|---|---|---|---|---|---|---|
| Thickness (pm) | 50 | 50 | 50 | 50 | 50 | 50 |
| Full width at half maximum of the first XRD peak (°) | 5.5 | 5.6 | 5.8 | 6.2 | 6.2 | 6.1 |
| Full width at half maximum of the second XRD peak (°) | 9.9 | 9.5 | 9.0 | 8.4 | 9.0 | 8.2 |
| Percentage (%) of the first full width at half maximum | 35.9 | 37.1 | 39.1 | 42.5 | 40.7 | 42.5 |
| Modulus (GPa) | 5.4 | 6.5 | 6.9 | 6.9 | 5.7 | 3.9 |
| Transmittance (%) | 88.8 | 88.7 | 88.8 | 88.7 | 76 | 89.1 |
| Haze (%) | 0.42 | 0.33 | 0.38 | 0.49 | 66.7 | 0.28 |
| Yellow index | 1.8 | 1.9 | 2.7 | 3.2 | 30.1 | 3.4 |
| Scratch resistance | Good | Good | Good | Good | Good | Poor |

As can be seen from Table 2 above, in the Examples in which the full width at half maximum of the first XRD peak on the XRD graph was 6° or less, such characteristics as modulus, transmittance, haze, and yellow index were excellent as compared with the Comparative Examples.

In contrast, in the Comparative Examples in which the full width at half maximum of the first XRD peak on the XRD graph exceeded 6°, such characteristics as yellow index, modulus, transmittance, and haze were deteriorated.

Specifically, in Comparative Example 1 in which IPC was reacted with the diamine compound before TPC, the full width at half maximum of the first XRD peak was 6.2°, resulting in a relative increase in haze and yellow index.

In Comparative Example 2 in which TPC was used in a relatively excessive amount of 95% by mole of the total number of moles of dicarbonyl compounds, the full width at half maximum of the first XRD peak was 6.2°, resulting in a significant increase in yellowness and haze and a decrease in transmittance.

In addition, in Comparative Example 3 in which TPC was used in a relatively small amount of 5% by mole of the total number of moles of dicarbonyl compounds, the full width at half maximum of the first XRD peak was 6.1°, resulting in a decrease in modulus, an increase in yellow index, in particular, occurrence of scratches in the evaluation of scratch resistance.

### Example 4

A 1-liter glass reactor equipped with a temperature-controllable double jacket was charged with 567 g of dimethylacetamide (DMAc) as an organic solvent at 10°C under a nitrogen atmosphere. Then, 64.0 g (0.200 mole) of 2,2'-bis(trifluoromethyl)-4,4'-diaminobiphenyl (TFDB) as an aromatic diamine was slowly added thereto and dissolved.

Subsequently, terephthaloyl chloride (TPC) as a first dicarbonyl compound in an amount of 38.8% by mole of the total number of moles of dicarbonyl compounds used in the polymerization was slowly added, followed by stirring the mixture for 1 hour. Then, isophthaloyl chloride (IPC) as a second dicarbonyl compound in an amount of 58.2% by mole of the total number of moles of dicarbonyl compounds used in the polymerization was added, followed by stirring the mixture for 1 hour, thereby preparing a first polymer solution.

A TPC solution and an IPC solution at a concentration of 10% by weight in a DMAc organic solvent were prepared, respectively.
1 ml of the TPC solution was added to the first polymer solution, followed by stirring the mixture for 30 minutes, which procedure was repeated, whereby about 1.2% by mole of TPC based on the total number of moles of dicarbonyl compounds was reacted to prepare a second polymer solution.
1 ml of the IPC solution was added to the second polymer solution, followed by stirring the mixture for 30 minutes, which procedure was repeated, whereby about 1.8% by mole of IPC based on the total number of moles of dicarbonyl compounds was reacted to prepare a third polymer solution. Here, the reaction temperature (polymerization temperature) of the first, second, and third polymer solutions was adjusted to about 10°C, and the reaction was terminated when the viscosity of the third polymer solution reached about 250,000 cps.

While the temperature of the polymer solution (varnish) was maintained at 10°C, the viscosity was measured using a viscometer of TOKI SANGYO's BH-II Model. The rpm was set to 4, and it was checked whether the target viscosity was achieved using spindle number 7.

The third polymer solution was coated onto a glass plate and then dried with hot air at 100°C for 30 minutes. The dried polyamide polymer material was peeled off from the glass plate, fixed to a pin frame, and thermally treated in a temperature range of 80°C to 300°C at a temperature elevation rate of 2°C/minute to obtain a polyamide-based film having a thickness of 50 µm.

As to the contents of the diamine compound (TFMB) and the dicarbonyl compounds (IPC and TPC), the number of moles and the sequence of addition of the dicarbonyl compounds based on 100 moles of the diamine compound are shown in Table 3.

The dicarbonyl compounds were added in the order shown in Table 3 (in the order from top to bottom), followed by stirring thereof. For example, in Example 4, after the diamine compound was added and dissolved in an organic solvent, the steps of adding 38.8% by mole of TPC and stirring thereof, adding 58.2% by mole of IPC and stirring thereof, adding 1.2% by mole of TPC and stirring thereof, and adding 1.8% by mole of IPC and stirring thereof were carried out sequentially.

### Examples 5 to 8 and Comparative Examples 4 to 6

Films were each prepared in the same manner as in Example 4, except that the contents of the respective reactants were changed as shown in Table 3 below.

### Comparative Example 7

In the preparation of the first polymer solution in Example 4, 70% by mole of TPC and 30% by mole of IPC based on the total dicarbonyl compounds were added to prepare the first polymer solution. The step of preparing the second polymer solution and the third polymer solution were skipped, the polymer solution was coated on a glass plate, dried, and thermally treated to prepare a polyamide-based film.

### Comparative Example 8

A polyamide-based film was prepared in the same manner as in Comparative Example 7, except that 75% by mole of TPC and 25% by mole of IPC based on the total dicarbonyl compounds were used to prepare the first polymer solution.

The films prepared in Examples 4 to 8 and Comparative Examples 4 to 6 were each measured and evaluated for the above physical properties. FT-IR analysis was further performed, as follows.

### Evaluation Example 7: FT-IR (Fourier-transform infrared spectroscopy) analysis

The polyamide-based films according to the Examples and Comparative Examples were each subjected to an FT-IR analysis. Here, an FT-IR Spectrometer of Thermo Fisher was used, and the analysis conditions were set as follows.
- Detector: MIR TGA
- Scan range: 4,000 cm⁻¹ to 650 cm⁻¹
- Resolution: 4
- Number of scans: 16

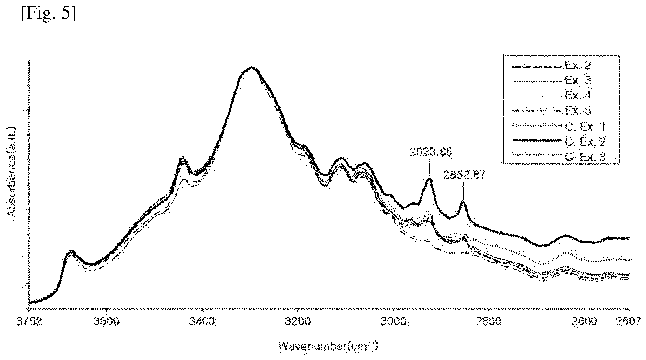

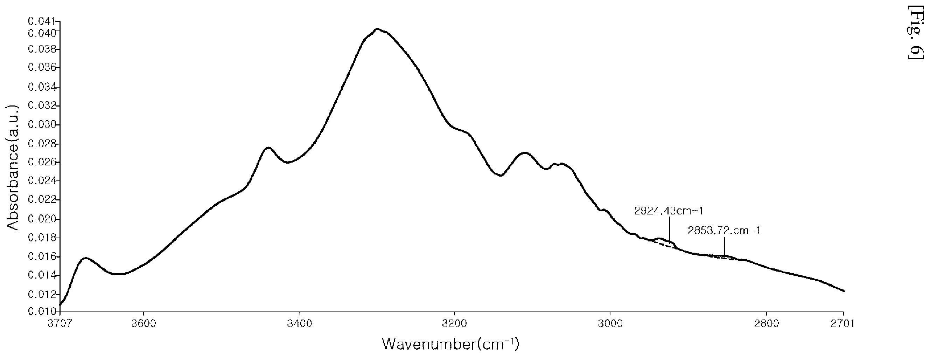

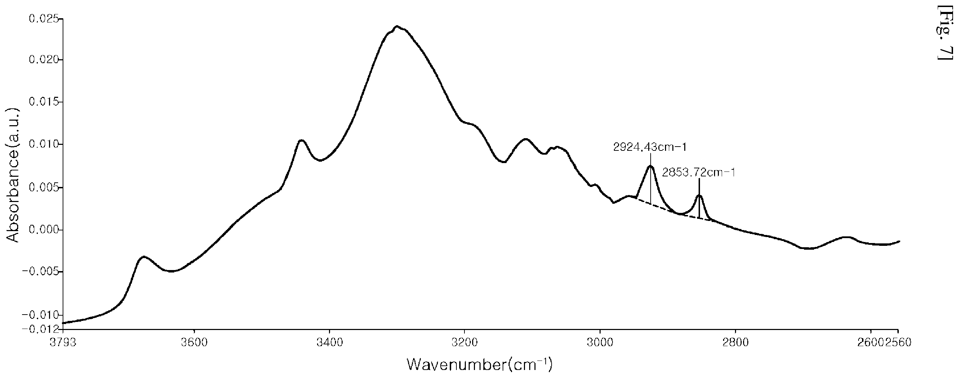

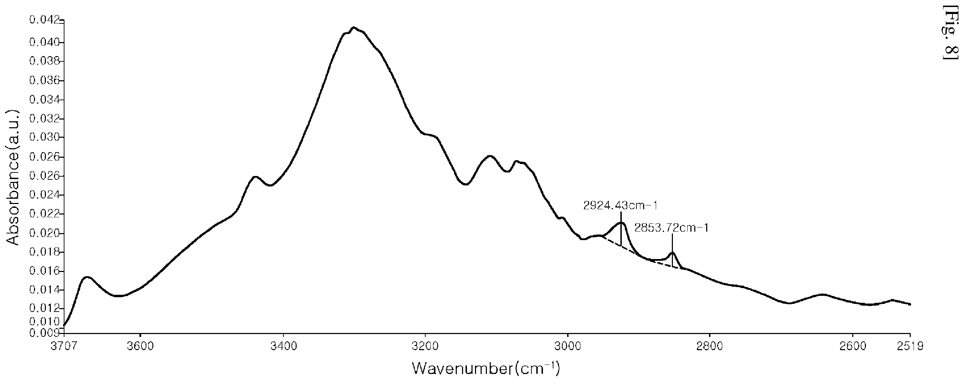

Fig. 5 shows FT-IR analysis spectra of the polyamide-based films of the Examples and Comparative Examples. Figs. 6 to 8 each show an FT-IR analysis spectrum of the polyamide-based films of Example 7 and Comparative Examples 5 and 6.

In the spectra of Figs. 5 to 8, the section in which the wavenumber is about 3,800 cm⁻¹ to 2,500 cm⁻¹ was expanded from the spectrum in which the wavenumber is 4,000 cm⁻¹ to 650 cm⁻¹.

The spectra of Figs. 6 to 8 were normalized based on the height of the IR peak at a wavenumber of 1,415 cm⁻¹, which was the largest IR peak in the wavenumber range of about 3,800 cm⁻¹ to 2,500 cm⁻¹, resulting in the spectrum of Fig. 5.

Referring to Figs. 5 to 7, a first IR peak was observed in the wavenumber range of about 2,960 cm⁻¹ to 2,895 cm⁻¹, and a second IR peak was observed in the wavenumber range of 2,890 cm⁻¹ to 2,820 cm⁻¹. The highest point of the first IR peak was located at a wavenumber of about 2,924.43 cm⁻¹, and the highest point of the second IR peak was located at a wavenumber of about 2,853.72 cm⁻¹.

For the first IR peak and the second IR peak, the starting points (2,960 cm⁻¹ and 2,890 cm⁻¹, respectively) and the end points (2,895 cm⁻¹ and 2,820 cm⁻¹, respectively) of the peaks were connected with a straight line to form the baseline of the IR peaks. For the IR peaks, the area of each IR peak was calculated by integrating the portion having an intensity value greater than that of the baseline.

In addition, the ratio (area ratio) of the area of the first IR peak to the area of the second IR peak was calculated and shown in Table 3 below.

**[Table 3]**

| | | | Ex. 4 | Ex. 5 | Ex. 6 | Ex. 7 | Ex. 8 | C. Ex. 4 | C. Ex. 5 | C. Ex. 6 |
|---|---|---|---|---|---|---|---|---|---|---|
| Amounts and sequence of the reactants added | Diamine compound | TFMB | 100 | 100 | 100 | 100 | 100 | 100 | 100 | 100 |
| | Dicarbonyl compound | TPC | 38.8 | 48.5 | 58.2 | 67.9 | 72.8 | 4.8 | 77.6 | 92.2 |
| | | IPC | 58.2 | 48.5 | 38.8 | 29.1 | 24.2 | 92.2 | 19.4 | 4.8 |
| | | TPC | 1.2 | 1.5 | 1.8 | 2.1 | 2.2 | 0.2 | 2.4 | 2.8 |
| | | IPC | 1.8 | 1.5 | 1.2 | 0.9 | 0.8 | 2.8 | 0.6 | 0.2 |
| IR characteristics | Area of the first IR peak | | 7.48 | 7.92 | 5.10 | 2.56 | 2.51 | 7.52 | 27.85 | 15.11 |
| | Area of the second IR peak | | 7.40 | 7.92 | 5.10 | 2.56 | 2.51 | 5.01 | 15.19 | 7.56 |
| | Area ratio | | 1.01 | 1.00 | 1.00 | 1.00 | 1.00 | 1.50 | 1.83 | 2.00 |
| Film characteristics | Thickness (µm) | | 50 | 50 | 50 | 50 | 50 | 50 | 50 | 50 |
| | Modulus (GPa) | | 5.1 | 5.3 | 6.4 | 6.9 | 6.8 | 3.9 | 6.8 | 5.7 |
| | Transmittance (%) | | 89.1 | 88.5 | 88.5 | 89.0 | 88.9 | 89.3 | 85.4 | 76.9 |
| | Haze (%) | | 0.3 | 0.5 | 0.4 | 0.4 | 0.4 | 0.3 | 34.0 | 69.0 |
| | Yellow index | | 2.5 | 2.2 | 2.4 | 2.8 | 2.7 | 3.6 | 22.0 | 31.1 |

Referring to Table 3, in the Examples in which the area ratio was 1.4 or less, the modulus, light transmittance, haze, and yellow index were improved as compared with the Comparative Examples.

For example, in the Comparative Examples in which the ratio of TPC and IPC used for the polymerization was 5:95, 80:20, or 95:5, the area of the first IR peak was 1.5 times or more relative to the area of the second IR peak on the IR spectrum, whereby the modulus, light transmittance, haze and/or yellow index were deteriorated.

In addition, in Comparative Examples 7 and 8, the viscosity of the first polymer solution was significantly less than 250,000 cps, so that it was difficult to form a polyamide-based film of a grade that could be substantially used as an optical film. The polyamide-based film prepared therefrom had a remarkably non-uniform thickness, and the characteristic deviations of modulus, light transmittance, haze, and yellow index were increased in each region on the polyamide-based film, making it remarkably unsuitable as a cover window for display devices.

## Claims

1. A polyamide-based film, which comprises a polyamide-based polymer and has a first peak having a maximum value in a section where 2θ is 10° to less than 20° on an XRD graph, wherein the first XRD peak has a full width at half maximum of 6° or less.

2. The polyamide-based film of claim 1, which further has a second XRD peak having a maximum value in a section where 2θ is 20° to 25°, wherein the percentage of the full width at half maximum of the first XRD peak relative to the sum of the full width at half maximum of the first XRD peak and the full width at half maximum of the second XRD peak is 40% or less.

3. A polyamide-based film, which comprises a polyamide-based polymer and has a first IR peak having a maximum value in a section where the wavenumber is 2,950 cm⁻¹ to 2,900 cm⁻¹ and a second IR peak having a maximum value in a section where the wavenumber is 2,875 cm⁻¹ to 2,825 cm⁻¹ on an IR spectrum, wherein the area of the first IR peak is 1.4 times or less relative to the area of the second IR peak.

4. The polyamide-based film of claim 3, wherein the area of the first IR peak is 0.6 times or more relative to the area of the second IR peak.

5. The polyamide-based film of claim 3, wherein the area of the first IR peak is 0.8 times to 1.2 times relative to the area of the second IR peak.

6. The polyamide-based film of claim 1 or 3, wherein the polyamide-based polymer comprises two or more types of an amide-based repeat unit.

7. The polyamide-based film of claim 6, wherein the two or more types of an amide-based repeat unit comprise a first amide-based repeat unit derived from a first dicarbonyl compound and a second amide-based repeat unit derived from a second dicarbonyl compound,
the angle between the two carbonyl groups contained in the first dicarbonyl compound is 160° to 180°, and
the angle between the two carbonyl groups contained in the second dicarbonyl compound is 80° to 140°.

8. The polyamide-based film of claim 1 or 3, which, based on a thickness of the film of 50 µm, has a modulus of 5 GPa or more, a transmittance of 80% or more, a haze of 1% or less, and a yellow index or 3.5 or less.

9. A cover window for a display device, which comprises the polyamide-based film of claim 1 or 3 and a functional layer.

10. A display device, which comprises a display unit; and a cover window disposed on the display unit, wherein the cover window comprises the polyamide-based film of claim 1 or 3 and a functional layer.

11. A process for preparing the polyamide-based film of claim 1 or 3, which comprises:
polymerizing a diamine compound and a dicarbonyl compound in an organic solvent to prepare a solution comprising a polyamide-based polymer;
casting the polymer solution to prepare a gel sheet; and
thermally treating the gel sheet.

12. The process for preparing the polyamide-based film according to claim 11, wherein the dicarbonyl compound comprises a first dicarbonyl compound and a second dicarbonyl compound in which the angle between the two carbonyl groups is smaller than that of the first dicarbonyl compound, and
the step of preparing the solution comprising a polyamide-based polymer is carried out by sequentially:
adding and dissolving a diamine compound in an organic solvent,
adding a first dicarbonyl compound and stirring it, and then adding a second dicarbonyl compound and stirring it to prepare a first polymer solution,
adding the first dicarbonyl compound or the second dicarbonyl compound and stirring it to prepare a second polymer solution, and
adding the first dicarbonyl compound or the second dicarbonyl compound and stirring it to prepare a third polymer solution.

13. The process for preparing the polyamide-based film according to claim 12, wherein the first dicarbonyl compound is added in the step of preparing the second polymer solution, and the second dicarbonyl compound is added in the step of preparing the third polymer solution.

14. The process for preparing the polyamide-based film according to claim 12, wherein the amount of the first dicarbonyl compound or the second dicarbonyl compound added in the step of preparing the second polymer solution is 0.5% by mole to 15% by mole, and
the amount of the first dicarbonyl compound or the second dicarbonyl compound added in the step of preparing the third polymer solution is 0.5% by mole to 15% by mole.
